# EUROPEAN PATENT SPECIFICATION

(11) **EP 3 262 309 B1**
(45) Date of publication and mention of the grant of the patent: **05.01.2022**
(21) Application number: 15801057.9
(22) Date of filing: 12.11.2015
(51) Int. Cl.: F16B 23/00

(54) **LIGHTWEIGHT FASTENER DESIGN**
ENTWURF FÜR LEICHTES BEFESTIGUNGSELEMENT
CONCEPTION D'ÉLÉMENT DE FIXATION LÉGER

(30) Priority: 26.02.2015 US 201562121465 P
(43) Date of publication of application: 03.01.2018
(73) Proprietor: Cold Heading Company, Warren, MI 48089 (US)
(72) Inventor: LARES, Alan, Royal Oak, MI 48067 (US)
(74) Representative: Carpmael, Robert Maurice Charles
(86) International application number: PCT/US2015/060320
(87) International publication number: WO 2016/137542

(56) References cited:
- WO-A1-2010/014881
- WO-A2-99/27261
- GB-A- 1 205 445
- None

## Description

### CROSS-REFERENCE TO RELATED APPLICATIONS

The present disclosure claims priority to U.S. Provisional Patent Application Serial No. 62/121,465, filed February 26, 2015, and U.S. Utility Patent Application Serial No. 14/939,190, filed November 12, 2015.

### TECHNICAL FIELD

The present disclosure relates generally to a new fastener design for use in securing parts. More specifically, the present disclosure relates to a new fastener design for use in securing parts that utilizes less material, is less expensive, and provides an efficient torque transfer head design.

### BACKGROUND OF THE DISCLOSURE

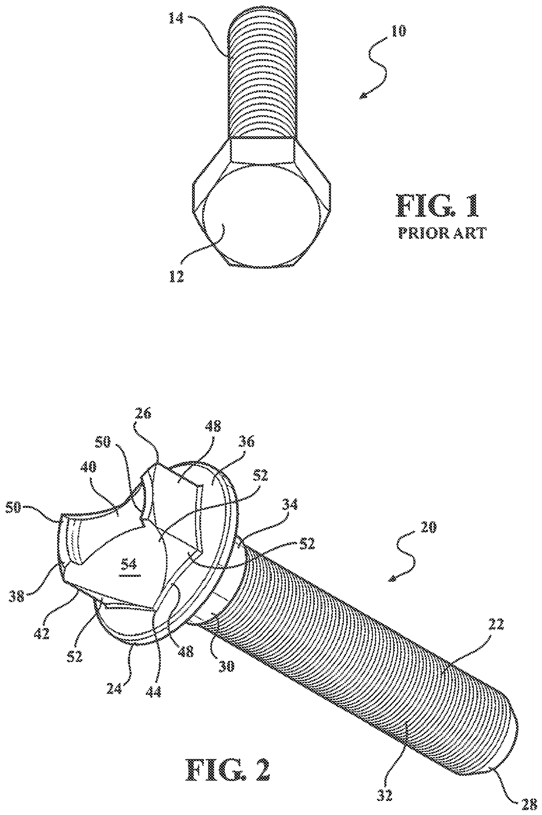

One common type of fastener includes what is known as a "hex-head" design. FIG 1 illustrates an exemplary known "hex-head" fastener, as generally represented by reference number 10. As is known, this type of fastener 10 utilizes a hex-shaped head 12 that allows for the application of driving torque to insert the fastener into a workpiece (not shown). These fasteners **10** also generally include threads **14** that assist with the insertion of the fastener into the workpiece to effectuate securement.

While traditional hex-head designs work for their intended purpose, they are not optimized for weight and thus are over-designed. As is known, with common hex-heads, only a very small portion of each segment of the hex may be utilized for torque application. More specifically, as is known, during installation of a fastener, a standard hex socket will transfer the applied torque to a traditional hex-head fastener via six (6) contact points on the flats of the fastener head. This is due to the fact that the tool utilized to drive the hex-head includes a receptacle for engaging the fastener head that is also hex-shaped. Because the internal hex of the tool may be slightly larger dimensionally than the hex-head of the fastener (in order to slip it freely over the head-head) the tool can rotate slightly before it contacts the fastener hex during initial driving.

As is known, in order to meet growing EPA regulations, and specifically CAFE regulations in the automotive industry, OEMs are constantly striving for lighter automobiles. Lighter automobiles can yield increased gas mileage. To achieve lighter vehicles, OEMs constantly urge their suppliers to design lighter parts. As most automobiles utilize a large number of fasteners, reducing the mass and/or weight of a fastener has the potential to provide significant weight savings for a vehicle and thus improved gas mileage. WO 2010/014881 A relates to a fastener having a low mass fastener head.

### SUMMARY OF THE DISCLOSURE

It is therefore an aspect of the present disclosure to provide an improved fastener design that has a reduced mass compared to prior conventional hex-head fasteners.

It is a related aspect to provide an improved fastener design for use in automotive applications that has a reduced mass compared to prior conventional hex-head fasteners.

It is another aspect of the present disclosure to provide an improved fastener design that provides cost savings over prior conventional hex-head fasteners.

In is still another aspect of the present disclosure to provide an improved fastener design that yields efficient torque application capabilities.

It is yet another aspect of the present disclosure to provide an improved fastener design for automotive applications that can help with improved gas mileage.

In accordance with the above and the other aspects of the present disclosure, an improved fastener design is provided. The fastening device includes a shank portion with a first end and a second end disposed remote from the first end. The fastening device includes a head portion disposed adjacent the second end of the shank portion The head portion of the fastening device includes a lower perimeter adjacent the second end of the shank portion, an upper perimeter disposed away from the lower perimeter and a body portion extending between the lower perimeter and the upper perimeter. The head portion is configured to engage a standard hex-shaped socket. The lower perimeter of the head portion has a generally hex shape and the upper perimeter has a different shape than the lower perimeter.

### BRIEF DESCRIPTION OF THE DRAWINGS

Other aspects of the present disclosure will be readily appreciated, as the same becomes better understood by reference to the following detailed description when considered in connection with the accompanying drawings wherein:
FIG 1 is a perspective view of fastener device with a hex-head shape according to the prior art;
FIG 2 is a perspective view of a fastener device according to an aspect of the disclosure;
FIG 3 is a top view of the fastener device of FIG 2;
FIG 4 is a cross-sectional illustration of the fastener device of FIG 3 along the lines 4-4;
FIG 5 is a perspective view of a fastener device according to another aspect of the disclosure;
FIG 6 is a top view of the fastener device of FIG 5;
FIG 7 is a cross-sectional illustration of the fastener device of FIG 6 along the lines 7-7;
FIG 8 is a schematic illustration of torque transfer between a head portion of a fastener device and hex socket according to an aspect of the disclosure; and
FIGs 9(a) through 9(d) illustrate a method of forming a fastener device according to an aspect of the disclosure.

### DETAILED DESCRIPTION OF THE DISCLOSURE

The present disclosure relates to a fastener apparatus **20** for securing objects to one another. According to an aspect, the disclosed fastener apparatus **20** may be employed to secure objects in the automotive industry. It will be appreciated that the fastener apparatus **20** may be employed in a variety of other industries. It will also be appreciated that the fastener apparatus **20** can be used to secure a variety of different objects together. The fastener apparatus **20** can be a bolt. However, it may be configured as a variety of other suitable fasteners.

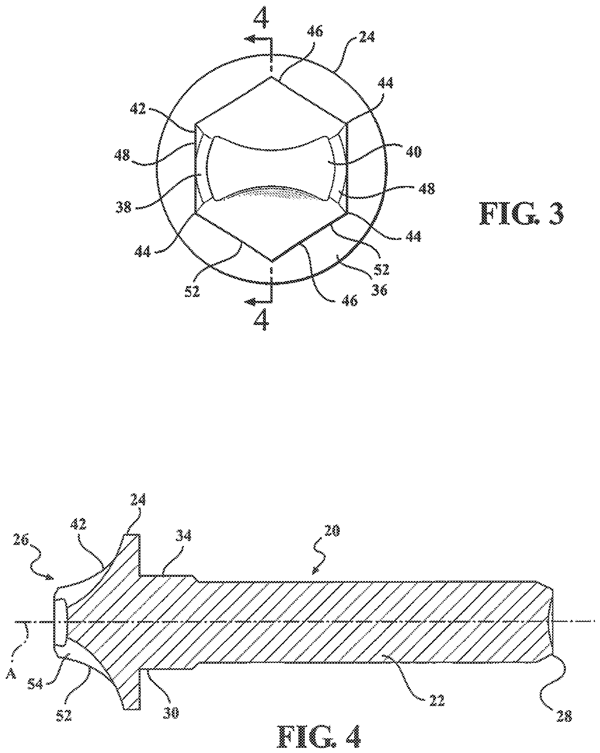

According to an aspect, and with reference to FIGs 2 through 4, the fastening apparatus **20** can generally include a shank portion **22**, a flange portion **24**, and a head portion **26**. As shown, the shank portion **22** can extend generally along an axis A between a first end portion **28** and a second end portion **30** disposed remotely from the first end portion **28**. According to an aspect, the first end portion **28** may have a generally flat shape. However, it will be appreciated that the first end portion **28** can have a variety of different shapes or configurations, including rounded, pointed or recessed. According to a still further aspect, the fastening apparatus **20** can include a spiral thread **32** formed around the exterior of the shank portion **22** between the first end portion **28** and the second end portion **30**. As is known, threads can assist in retaining the fastening apparatus in place in the workpiece. According to another aspect, the shank portion **22** can include an enlarged shoulder portion **34** adjacent the second end portion **30**. The enlarged shoulder portion **34** can provide for increase shear strength for the fastening apparatus **20**. The enlarged shoulder portion **34** can also serve to create some separation between mating components. It will be appreciated that the shank portion **22** can have a variety of different configurations and could have other features not specifically shown or described.

According to another aspect, the flange portion **24** can have a circular shaped cross-section and it may be disposed at or adjacent the second end portion **30** of the shank **22**. The flange portion **24** can present a platform along a plane that is transverse to the axis A. The flange portion **24** can have a variety of different shapes, including oval.

According to a further aspect, the head portion **26** can extend axially away from an upper surface **36** of the flange portion **24**. As shown, the head portion **26** can have a top surface **38** that includes a depression **40** with a generally circular shaped cross-section. The depression **40** can extend axially into the top surface **38** toward the shank portion **22**. It will be appreciated that the depression **40** can have a variety of different shapes. According to an aspect, the head portion **26** can include a body portion **42** that extends between the flange portion **24** and the top surface **38**. The head portion **26** has a generally hexagonally-shape. The body portion **42** is generally defined by six lower corners **44** and six lower edge portions **46** that extend between the lower corners **44**. According to an aspect, the body portion **42** can also include a pair of sidewalls **48** that extend axially away from one of the lower edge portions **46** in spaced and parallel relationship with one another. According to an aspect, each of the sidewalls **48** can terminate in a corresponding pair of upper corners **50** that are axially aligned with a pair of the lower corners **44** at the upper surface **36**. According to a still further aspect, a pair of partial side surfaces **52** can extend away from each of the upper corners **50** and away from an adjacent one of the pair of sidewalls **48**. The partial side surfaces **52** can converge toward each other and meet at one of the lower corners **44**. The partial surfaces **52** can converge in a curved or linear fashion. The partial side surfaces **52** can define a chambered wall **54** therebetween, which may be configured as a single arcuate surface. However, the chamfered wall **54** may take on a variety of different shapes.

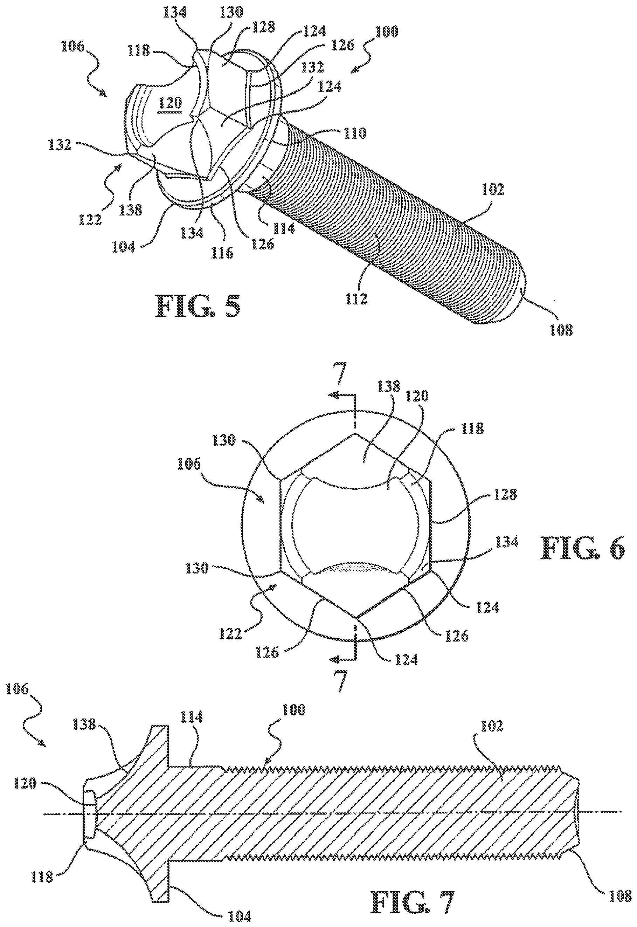

With reference to FIGs 5 through 7, which illustrate a fastening apparatus **100** according to another aspect of the disclosure. The fastening apparatus **100** can generally include a shank portion **102**, a flange portion **104**, and a head portion **106**. As shown, the shank portion **102** can extend generally along an axis A between a first end portion **108** and a second end portion **110** disposed remotely from the first end portion **108**. According to an aspect, the first end portion **108** may have a generally flat shape. However, it will be appreciated that the first end portion **108** can have a variety of different shapes or configurations, including rounded, pointed or recessed. According to a still further aspect, the fastening apparatus **100** can include a spiral thread **112** formed around the exterior of the shank portion **102** between the first end portion **108** and the second end portion **110**. According to another aspect, the shank portion **102** can include an enlarged shoulder portion **114** adjacent the second end portion **110**. The enlarged shoulder portion **114** can provide for increased shear strength for the fastening apparatus **100** and also serve to keep the components being secured somewhat separated. It will be appreciated that the shank portion **102** can have a variety of different configurations and could have other features not specifically shown or described.

According to another aspect, the flange portion **104** can have a circular shaped cross-section and may be disposed at or adjacent the second end portion **110** of the shank **102**. The flange portion **104** can present a platform along a plane that is transverse to the axis A. The flange portion **104** can have a variety of different shapes, including oval.

According to a further aspect, the head portion **106** can extend axially away from an upper surface **116** of the flange portion **104**. As shown, the head portion **106** can have a top surface **118** that includes a depression **120** with a generally circular shaped cross-section. The depression **120** can extend axially into the top surface **118** toward the shank portion **102**. It will be appreciated that the depression **120** can have a variety of different shapes. According to an aspect, the head portion **106** can include a body portion **122** that extends between the flange portion **104** and the top surface **118**. The head portion **106** has a generally hexagonally-shape. The body portion **122** is generally defined by six lower corners **124** and six lower edge portions **126** that extend between the lower corners **124**. According to an aspect, the body portion **122** can also include a pair of sidewalls **128** that extend axially away from one of the lower edge portions **126** in spaced and parallel relationship with one another. According to an aspect, each of the sidewalls **128** can terminate in a pair of upper corners **130** that are axially aligned with a pair of the lower corners **124** at the upper surface **116**. According to a still further aspect, a pair of partial side surfaces **132** can extend away from a distal point **134** adjacent each of the upper corners **130** and converge towards each other at meet at one of the lower corners **124**. The location of the distal point **134** with respect to the upper corners **130** can obviously vary. The partial side surface **132** can converge in a curved or linear fashion. The partial side surfaces **132** can define a chamfered wall **138** therebetween. According to an aspect, the pair of chamfered walls **138** can extend from a pair of the distal points **134** to one of the lower corners **124** of the base generally in a V-shape to provide for reduced mass of fastening apparatus **20** while maintaining structural integrity of the fastening apparatus **20** during tightening and loosening with respect to the workpiece. The chamfered wall **138** can be arcuate or curved as shown. However, the chamfered wall **138** may take on a variety of different shapes.

It will be appreciated that while the lower perimeter of the body portion **122** as defined by the lower corners **124** and lower edge portions **126** can define a hex shape, the upper perimeter as defined by the upper corners **130** and the upper edge surfaces may define a different shape. The lower perimeter may have a greater dimension that than the upper perimeter, which can provide significant reduction in weight savings.

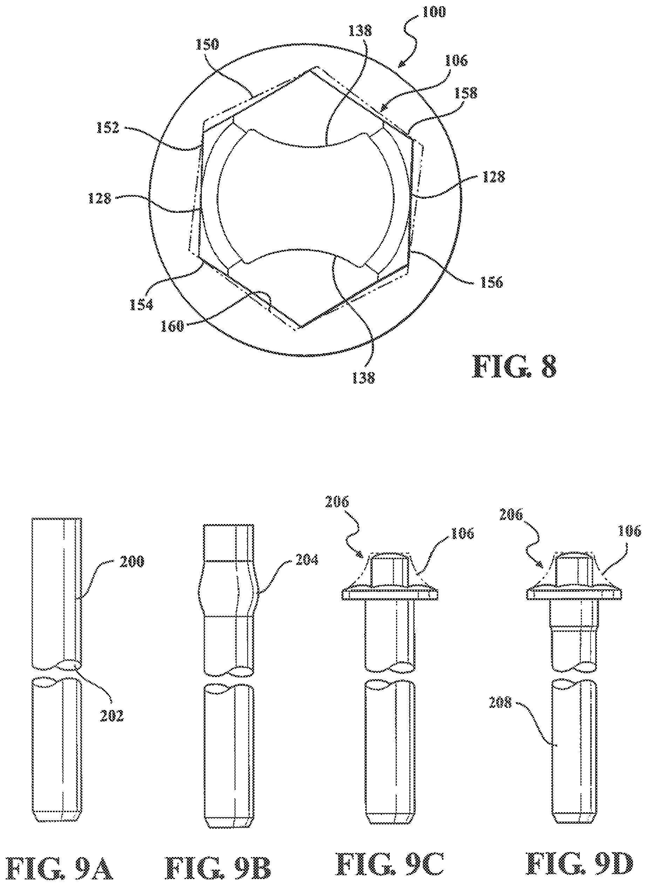

With reference to FIG 8, according to an aspect, during insertion (tightening) or removal (loosening) of the fastening apparatus **100**, a socket **150** having a receptacle **160** can be disposed over the head portion **106** of the fastening apparatus **100**. According to another aspect, the socket receptacle **160** can have a hex shape that generally corresponds to that of the head portion 106. However, the socket receptacle **160** may be formed slightly larger than the head portion **106** so as to allow insertion thereover. In operation, the socket receptacle **160** can engage a combination of the sidewalls **128** and the partial side surfaces **132** adjacent to the upper corners **130** such that there are a total of four contact points between the socket receptacle **160** and the head portion **106** to tighten or loosen the fastening apparatus **100**. According to an aspect, the disclosed head design can transfer the applied moment from the socket **150** to the fastener by way of four (4) separate contact points **152**, **154**, **156**, **158** along flat surfaces of the fastener head portion **106** without degradation in bolt performance. According to an aspect, the profile of the chamfered walls **138** and their positions opposing one another in a location corresponding to the location of two opposite traditional hex corners can aid in cold forming the shape of the head portion **106**, as discussed below.

FIGs 9a through 9d schematically illustrate a method of forming a fastening device **100** according to an aspect of the disclosure. According to an aspect, the fastening device **100** may be formed by a cold forming sequence. However, it will be appreciated that a variety of other suitable forming processes may be employed. According to an exemplary cold forming process, which differs from traditional processes for forming a traditional hex head fastener, a wire blank **200** is initially proved. As shown schematically in FIG 9a, the wire blank **200** may be cut-off, as generally indicated by reference number **202**, so that it has the proper volume for the final fastener for further processing. It will be appreciated that various cutting processes may be employed. As shown schematically in FIG 9b, according to this aspect, a cone upset **204** may be formed in the blank **200**, which can serve to enlarge the diameter of the blank **200**.

As shown in FIG 9c, a head portion **106** having a desired shape can be formed therein. According to an aspect, the head portion **106** can have a shape that differs from a conventional hex-head design. Specifically, the punch side die can be configured to provide a head upset **206** consistent with one of the exemplary aspects shown and discussed herein. More specifically, the punch side die can be configured to provide a head upset with a geometric profile having a hex head design with four (4) points of contact. According to an aspect shown in FIG 9d, the shank portion **102** may then be extruded to form a fastening device 100 of the desired size and shape, as generally indicated by reference number **208**.

According to an aspect, the fastening device **100** can be formed from low carbon, boron and alloy steel materials. However, a variety of other suitable materials can be employed, including aluminum.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Many other embodiments may be apparent to those of skill in the art upon reviewing the disclosure. Other embodiments may be used and derived from the disclosure, such that a structural substitution, logical substitution, or another change may be made without departing from the scope of the disclosure. Accordingly, the disclosure is to be regarded as illustrative rather than restrictive.

Certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges includes each and every value within that range.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The above-disclosed subject matter is to be considered illustrative, and not restrictive, and the appended claims are intended to cover any and all such modifications, enhancements, and other embodiments that fall within the scope of the present invention. Thus, to the maximum extent allowed by law, the scope of the present invention is to be determined by the broadest permissible interpretation of the following claims and their equivalents, and shall not be restricted or limited by the foregoing detailed description.

Although only a few exemplary embodiments have been described in detail above, those skilled in the art will readily appreciate that many modifications are possible in the exemplary embodiments without materially departing from the novel teachings and advantages of the embodiments of the present disclosure. Accordingly, all such modifications are intended to be included within the scope of the embodiments of the present disclosure as defined in the following claims. In the claims, means-plus-function clauses are intended to cover the structures described herein as performing the recited function and not only structural equivalents, but also equivalent structures.

## Claims

1. A fastening device (20, 100), comprising:
a shank portion (22, 102) having a first end (28, 108) and a second end (30, 110) disposed remote from the first end (28, 108);
a head portion (26, 106) disposed adjacent the second end (30, 110) of the shank portion (22, 102) and including a plurality of surfaces configured to engage a standard hex-shaped socket, the head portion (26, 106) having a lower perimeter adjacent the second end (30, 110) of the shank portion (22, 102), an upper perimeter disposed remote from the lower perimeter and being permanently fixed to the lower perimeter by a body portion (42, 122) extending between the lower perimeter and the upper perimeter;
the lower perimeter having a generally hex shape with six lower corners (44, 124) and six lower edge portions (46, 126) configured to receive the standard hex-shaped socket to facilitate tightening and loosening the fastening device (20, 100); and
wherein the upper perimeter has a different shape than the lower perimeter.

2. The fastener (20, 100) of claim 1 wherein the body portion (42, 122) includes a geometric profile and wherein the plurality of surfaces are configured to have four points of contact with a standard hex-shaped socket.

3. The fastener (20, 100) of claim 2, wherein the plurality of surfaces include a pair of opposing sidewalls (48, 128) that each serve as a single point of contact.

4. The fastener (20, 100) of claim 3, wherein the body portion (42, 122) has a first side that includes a first partial side surface (52, 132) that extends away from one of the pair of opposing sidewalls (48, 128) and a second partial side surface (52, 132) that extends away from the other of the pair of opposing sidewalls (48, 128) and toward the first partial side surface (52, 132);
wherein the first partial side surface (52, 132) and the second partial side surface (52, 132) intersect at a first lower corner (44, 124); and
wherein one of the first partial side surface (52, 132) or the second partial side surface (52, 132) on the first side of the body portion (42, 122) serves as a third point of contact, and optionally, wherein the body portion (42, 122) has a second side that opposes the first side and includes a first partial side surface (52, 132) that extends away from one of the opposing sidewalls (48, 128) and a second partial side surface (52, 132) that extends away from the other of the pair of opposing sidewalls (48, 128) and toward the first partial side surface (52, 132);
wherein the first partial side surface (52, 132) and the second partial side surface (52, 132) on the second side of the body portion (42, 122) intersect at a second lower corner (44, 124), which is opposite the first lower corner (44, 124); and
wherein one of the first partial side surface (52, 132) or the second partial side surface (52, 132) on the second side of the body portion (42, 122) serves as a fourth point of contact.

5. The fastener (20, 100) of claim 4, wherein the first partial side surface (52, 132) has a first partial surface edge that begins adjacent a first upper corner (50) to the first lower corner (44, 124) and wherein the second partial side surface (52, 132) has a second partial surface edge that begins adjacent a second upper corner (50) to the first lower corner (44, 124), and optionally, wherein the first partial surface edge and the second partial surface edge each have a generally arcuate shape, and optionally, wherein the first partial surface edge and the second partial surface edge are spaced apart over substantially all of their length and define a chamfered surface (54, 138) therebetween;
wherein the chamfered surface (54, 138) is recessed with respect to a first outer surface of the first partial side surface (52, 132) and a second outer surface of the second partial side surface (52, 132), and optionally, wherein the first chamfered surface (54, 138) has a generally concave shape.

6. The fastener (20, 100) of claim 5, wherein the first partial surface edge begins at the first upper corner (50) and the second partial surface edge begins at the second upper corner (50).

7. The fastener (20, 100) of claim 5, further comprising:
a first upper edge that extends away from the first upper corner (50) and terminates at a first distal point and wherein the first partial surface edge begins at the first distal point;
a second upper edge that extends away from the second upper corner (50) and terminates at a second distal point and wherein the second partial surface edge begins at the second distal point.

8. The fastener (20, 100) of claim 1, wherein the shank portion (22, 102) includes one or more threads (32, 112) formed around an outer surface thereof.

9. The fastener (20, 100) of claim 1, further comprising a flange portion (24) disposed between the head portion (26, 106) and the shank portion (22, 102).

10. The fastener (20, 100) of claim 9, wherein the flange portion (24) has a generally oval shape.

11. A fastening device (20, 100) configured for use in an automobile for securing two structures together, comprising:
a shank portion (22, 102) having a first end (28, 108) and a second end (30, 110) disposed remote from the first end (28, 108);
a head portion (26, 106) disposed adjacent the second end (30, 110) of the shank portion (22, 102);
the head portion (26, 106) having a body portion (42, 122) configured to engage a standard hex-shape socket, the body portion (42, 122) having a shape that differs from a standard-hex shape and includes four separate points of contact for engaging the standard hex-shape socket, and wherein the head portion (26, 106) includes a lower perimeter between the body portion (42, 122) and the shank portion (22, 102), the lower perimeter having a standard hex-shape including six lower corners (44, 124) and six lower edge portions of substantially equal length configured to receive the standard hex-shape socket to facilitate tightening and loosening the fastening device (20, 100).

12. The fastening device (20, 100) of claim 11, wherein the head portion (26, 106) further includes an upper perimeter having a different shape than the lower perimeter.

13. The fastening device (20, 100) of claim 12, wherein the lower perimeter has a greater length than the upper perimeter.

14. The fastening device (20, 100) of claim 12, wherein the body portion (42, 122) includes a plurality of contact engaging surfaces including a pair of opposing sidewalls (48, 128) and a pair of partial side surfaces (52, 132) disposed on opposing sides of the body portion (42, 122), and optionally, wherein a first opposing side of the body portion (42, 122) includes a first partial side surface (52, 132) that extends away from one of the pair of opposing sidewalls (48, 128) and a second partial side surface (52, 132) that extends away from the other of the pair of opposing sidewalls (48, 128);
wherein the first partial side surface (52, 132) and the second partial side surface (52, 132) on the first side of the body portion (42, 122) converge toward each other and intersect at a first lower corner (44, 124), and optionally, where a second opposing side of the body portion (42, 122) includes a second partial side surface (52, 132) that extends away from the one of the pair of opposing sidewalls (48, 128) and a second partial side surface (52, 132) that extends away from the other of the pair of opposing sidewalls (48, 128);
wherein the first partial side surface (52, 132) and the second partial side surface (52, 132) on the second side of the body portion (42, 122) converge toward each other and intersect at a second lower corner (44, 124).

15. The fastening device (20, 100) of claim 14, wherein the first partial side surface (52, 132) and the second partial side surface (52, 132) define a first chamfered surface (54, 138) therebetween which is recessed with respect to the first partial side surface (52, 132) and the second partial side surface (52, 132).

## Patentansprüche

1. Befestigungsvorrichtung (20, 100), die Folgendes umfasst:
einen Schaftabschnitt (22, 102), der ein erstes Ende (28, 108) und ein zweites Ende (30, 110), das entfernt von dem ersten Ende (28, 108) angeordnet ist, aufweist,
einen Kopfabschnitt (26, 106), der angrenzend an das zweite Ende (30, 110) des Schaftabschnitts (22, 102) angeordnet ist und eine Vielzahl von Flächen einschließt, die dafür konfiguriert sind, einen standardmäßigen Innensechskant in Eingriff zu nehmen, wobei der Kopfabschnitt (26, 106) einen unteren Umfang angrenzend an das zweite Ende (30, 110) des Schaftabschnitts (22, 102), einen oberen Umfang, der entfernt von dem unteren Umfang angeordnet ist, aufweist, und durch einen Körperabschnitt (42, 122), der sich zwischen dem unteren Umfang und dem oberen Umfang erstreckt, dauerhaft an dem unteren Umfang befestigt ist,
wobei der untere Umfang eine im Allgemeinen sechseckige Form mit sechs unteren Ecken (44, 124) und sechs unteren Kantenabschnitten (46, 126) aufweist, die dafür konfiguriert sind, den standardmäßigen Innensechskant aufzunehmen, um Anziehen und Lösen der Befestigungsvorrichtung (20, 100) zu erleichtern, und
wobei der obere Umfang eine andere Form aufweist als der untere Umfang.

2. Befestigungselement (20, 100) nach Anspruch 1, wobei der Körperabschnitt (42, 122) ein geometrisches Profil einschließt und wobei die Vielzahl von Flächen dafür konfiguriert ist, vier Berührungspunkte mit dem standardmäßigen Innensechskant aufzuweisen.

3. Befestigungselement (20, 100) nach Anspruch 2, wobei die Vielzahl von Flächen ein Paar von gegenüberliegenden Seitenwänden (48, 128) einschließen, die jeweils als ein einzelner Berührungspunkt dienen.

4. Befestigungselement (20, 100) nach Anspruch 3, wobei der Körperabschnitt (42, 122) eine erste Seite aufweist, die eine erste Teilseitenfläche (52, 132), die sich weg von der einen des Paares von gegenüberliegenden Seitenwänden (48, 128) erstreckt, und eine zweite Teilseitenfläche (52, 132), die sich weg von der anderen des Paares von gegenüberliegenden Seitenwänden (48, 128) und hin zu der ersten Teilseitenfläche (52, 132) erstreckt, einschließt,
wobei sich die erste Teilseitenfläche (52, 132) und die zweite Teilseitenfläche (52, 132) an einer ersten unteren Ecke (44, 124) schneiden, und
wobei eine von der ersten Teilseitenfläche (52, 132) oder der zweiten Teilseitenfläche (52, 132) auf der ersten Seite des Körperabschnitts (42, 122) als ein dritter Berührungspunkt dient und, wahlweise, wobei der Körperabschnitt (42, 122) eine zweite Seite aufweist, die der ersten Seite gegenüberliegt und eine erste Teilseitenfläche (52, 132), die sich weg von einer der gegenüberliegenden Seitenwände (48, 128) erstreckt, und eine zweite Teilseitenfläche (52, 132), die sich weg von der anderen des Paares von gegenüberliegenden Seitenwänden (48, 128) und hin zu der ersten Teilseitenfläche (52, 132) erstreckt, einschließt,
wobei sich die erste Teilseitenfläche (52, 132) und die zweite Teilseitenfläche (52, 132) auf der zweiten Seite des Körperabschnitts (42, 122) an einer zweiten unteren Ecke (44, 124), die der ersten unteren Ecke (44, 124) gegenüberliegt, schneiden, und
wobei eine von der ersten Teilseitenfläche (52, 132) oder der zweiten Teilseitenfläche (52, 132) auf der zweiten Seite des Körperabschnitts (42, 122) als ein vierter Berührungspunkt dient.

5. Befestigungselement (20, 100) nach Anspruch 4, wobei die erste Teilseitenfläche (52, 132) eine erste Teilseitenflächenkante, die angrenzend an eine erste obere Ecke (50) beginnt, bis zu der ersten unteren Ecke (44, 124) aufweist und wobei die zweite Teilseitenfläche (52, 132) eine zweite Teilseitenflächenkante, die angrenzend an eine zweite obere Ecke (50) beginnt, bis zu der ersten unteren Ecke (44, 124) aufweist und, wahlweise, wobei die erste Teilseitenflächenkante und die zweite Teilseitenflächenkante jeweils eine im Allgemeinen bogenförmige Gestalt aufweisen und, wahlweise, wobei die erste Teilseitenflächenkante und die zweite Teilseitenflächenkante über im Wesentlichen ihre gesamte Länge voneinander beabstandet sind und eine abgeschrägte Fläche (54, 138) zwischen denselben definieren,
wobei die abgeschrägte Fläche (54, 138) in Bezug auf eine erste Außenfläche der ersten Teilseitenfläche (52, 132) und eine zweite Außenfläche der zweiten Teilseitenfläche (52, 132) eingezogen ist und, wahlweise, wobei die erste abgeschrägte Fläche (54, 138) eine im Allgemeinen konkave Form aufweist.

6. Befestigungselement (20, 100) nach Anspruch 5, wobei die erste Teilseitenflächenkante an der ersten oberen Ecke (50) beginnt und die zweite Teilseitenflächenkante an der zweiten oberen Ecke (50) beginnt.

7. Befestigungselement (20, 100) nach Anspruch 5, das ferner Folgendes umfasst:
eine erste obere Kante, die sich weg von der ersten oberen Ecke (50) erstreckt und an einem ersten distalen Punkt endet, und wobei die erste Teilseitenflächenkante an dem ersten distalen Punkt beginnt,
eine zweite obere Kante, die sich weg von der zweiten oberen Ecke (50) erstreckt und an einem zweiten distalen Punkt endet, und wobei die zweite Teilseitenflächenkante an dem zweiten distalen Punkt beginnt.

8. Befestigungselement (20, 100) nach Anspruch 1, wobei der Schaftabschnitt (22, 102) einen oder mehrere Gewindegänge (32, 112) einschließt, die um eine Außenfläche desselben geformt sind.

9. Befestigungselement (20, 100) nach Anspruch 1, das ferner einen Flanschabschnitt (24) umfasst, der zwischen dem Kopfabschnitt (26, 106) und dem Schaftabschnitt (22, 102) angeordnet ist.

10. Befestigungselement (20, 100) nach Anspruch 9, wobei der Flanschabschnitt (24) eine im Allgemeinen ovale Form aufweist.

11. Befestigungsvorrichtung (20, 100), die zur Verwendung in einem Automobil zum Befestigen zweier Strukturen aneinander konfiguriert ist, wobei sie Folgendes umfasst:
einen Schaftabschnitt (22, 102), der ein erstes Ende (28, 108) und ein zweites Ende (30, 110), das entfernt von dem ersten Ende (28, 108) angeordnet ist, aufweist,
einen Kopfabschnitt (26, 106), der angrenzend an das zweite Ende (30, 110) des Schaftabschnitts (22, 102) angeordnet ist,
wobei der Kopfabschnitt (26, 106) einen Körperabschnitt (42, 122) aufweist, der dafür konfiguriert ist, einen standardmäßigen Innensechskant in Eingriff zu nehmen, wobei der Körperabschnitt (42, 122) eine Form aufweist, die sich von einer standardmäßigen Sechskantform unterscheidet, und vier gesonderte Berührungspunkte zum In-Eingriff-Nehmen des standardmäßigen Innensechskants einschließt, und wobei der Kopfabschnitt (26, 106) einen unteren Umfang zwischen dem Körperabschnitt (42, 122) und dem Schaftabschnitt (22, 102) einschließt, wobei der untere Umfang eine standardmäßige Sechskantform aufweist, die sechs untere Ecken (44, 124) und sechs untere Kantenabschnitte mit im Wesentlichen gleicher Länge einschließt, die dafür konfiguriert sind, den standardmäßigen Innensechskant aufzunehmen, um Anziehen und Lösen der Befestigungsvorrichtung (20, 100) zu erleichtern.

12. Befestigungsvorrichtung (20, 100) nach Anspruch 11, wobei der Kopfabschnitt (26, 106) ferner einen oberen Umfang einschließt, der eine andere Form aufweist als der untere Umfang.

13. Befestigungsvorrichtung (20, 100) nach Anspruch 12, wobei der untere Umfang eine größere Länge aufweist als der obere Umfang.

14. Befestigungsvorrichtung (20, 100) nach Anspruch 12, wobei der Körperabschnitt (42, 122) eine Vielzahl von Berührungseingriffsflächen einschließt, die ein Paar von gegenüberliegenden Seitenwänden (48, 128) und ein Paar von Teilseitenflächen (52, 132), die auf gegenüberliegenden Seiten des Körperabschnitts (42, 122) angeordnet sind einschließen, und, wahlweise, wobei eine erste gegenüberliegende Seite des Körperabschnitts (42, 122) eine erste Teilseitenfläche (52, 132), die sich weg von der einen des Paares von gegenüberliegenden Seitenwänden (48, 128) erstreckt, und eine zweite Teilseitenfläche (52, 132), die sich weg von der anderen des Paares von gegenüberliegenden Seitenwänden (48, 128) erstreckt, einschließt,
wobei die erste Teilseitenfläche (52, 132) und die zweite Teilseitenfläche (52, 132) auf der ersten Seite des Körperabschnitts (42, 122) zueinander hin zusammenlaufen und sich an einer ersten unteren Ecke (44, 124) schneiden und, wahlweise, worin eine zweite gegenüberliegende Seite des Körperabschnitts (42, 122) eine zweite Teilseitenfläche (52, 132), die sich weg von der einen des Paares von gegenüberliegenden Seitenwänden (48, 128) erstreckt, und eine zweite Teilseitenfläche (52, 132), die sich weg von der anderen des Paares von gegenüberliegenden Seitenwänden (48, 128) erstreckt, einschließt,
wobei die erste Teilseitenfläche (52, 132) und die zweite Teilseitenfläche (52, 132) auf der zweiten Seite des Körperabschnitts (42, 122) zueinander hin zusammenlaufen und sich an einer zweiten unteren Ecke (44, 124) schneiden.

15. Befestigungsvorrichtung (20, 100) nach Anspruch 14, wobei die erste Teilseitenfläche (52, 132) und die zweite Teilseitenfläche (52, 132) eine erste abgeschrägte Fläche (54, 138) zwischen denselben definieren, die in Bezug auf die erste Teilseitenfläche (52, 132) und die zweite Teilseitenfläche (52, 132) eingezogen ist.

## Revendications

1. Dispositif de fixation (20, 100), comprenant :
une partie de tige (22, 102) comportant une première extrémité (28, 108) et une deuxième extrémité (30, 110) disposée à l'écart de la première extrémité (28, 108) ;
une partie de tête (26, 106) disposée de manière adjacente à la deuxième extrémité (30, 110) de la partie de tige (22, 102) et incluant une pluralité de surfaces configurées pour 'entrer en prise avec une douille hexagonale standard, la partie de tête (26, 106) ayant un périmètre inférieur près de la deuxième extrémité (36, 110) de la partie de tige (22, 102), un périmètre supérieur disposé à l'écart du deuxième du périmètre inférieur et étant fixée de manière permanente sur le périmètre inférieur par une partie de corps (42, 122) s'étendant entre le périmètre inférieur et le périmètre supérieur ;
le périmètre inférieur ayant une forme généralement hexagonale avec six coins inférieurs (44, 124) et six parties de bord inférieures (46, 126) configurées pour recevoir la douille de forme hexagonale standard pour faciliter le serrage et le desserrage du dispositif de fixation (20, 100) ; et
dans lequel le périmètre supérieur a une forme différente de celle du périmètre inférieur.

2. Dispositif de fixation (20, 100) selon la revendication 1, dans lequel la partie de corps (42, 122) inclut un profil géométrique, et dans lequel la pluralité de surfaces sont configurées pour avoir quatre points de contact avec la douille de forme hexagonale standard.

3. Dispositif de fixation (20, 100) selon la revendication 2, dans lequel la pluralité de surfaces incluent une paire de parois latérales opposées (48, 128) servant chacune de point de contact individuel.

4. Dispositif de fixation (20, 100) selon la revendication 3, dans lequel la partie de corps (42, 122) comporte un premier côté qui inclut une première surface latérale partielle (52, 132) s'étendant à l'écart de l'une de la paire de parois latérales opposées (48, 128), et une deuxième surface latérale partielle (52, 132) s'étendant à l'écart de l'autre de la paire de parois latérales opposées (48, 128) et vers la première surface latérale partielle (52, 132) ;
dans lequel la première surface latérale partielle (52, 132) et la deuxième surface latérale partielle (52, 132) se coupent au niveau d'un premier coin inférieur (44, 124) ; et
dans lequel une de la première surface latérale partielle (52, 132) ou de la deuxième surface latérale partielle (52, 132) sur le premier côté de la partie de corps (42, 122) sert de troisième point de contact, et facultativement dans lequel la partie de corps (42, 122) comporte un deuxième côté, opposé au premier côté et incluant une première surface latérale partielle (52, 132) s'étendant à l'écart d'une des parois latérales opposées (48, 128) et une deuxième surface latérale partielle (52, 132) s'étendant à l'écart de l'autre de la paire de parois latérales opposées (48, 128) et vers la première surface latérale partielle (52, 132) ;
dans lequel la première surface latérale partielle (52, 132) et la deuxième surface latérale partielle (52, 132) sur le deuxième côté de la partie de corps (42, 122) se coupent au niveau d'un deuxième coin inférieur (44, 124) opposé au premier coin inférieur (44 ; 124) ; et
dans lequel une de la première surface latérale partielle (52, 132) ou de la deuxième surface latérale partielle (52, 132) sur le deuxième côté de la partie de cops (42, 122) sert de quatrième point de contact.

5. Dispositif de fixation (20, 100) selon la revendication 4, dans lequel la première surface latérale partielle (52 132) comporte un bord de première surface latérale partielle qui débute près d'un premier coin supérieur (50) et s'étend vers le premier coin inférieur (44, 124), et dans lequel la deuxième surface latérale partielle (52, 132) comporte un bord de deuxième surface latérale partielle qui débute près d'un deuxième coin supérieur (50) et s'étend vers le premier coin inférieur (44, 124), et facultativement dans lequel le bord de première surface latérale partielle et le bord de deuxième surface latérale partielle ont chacun une forme généralement arquée, et facultativement dans lequel le bord de première surface latérale partielle et le bord de deuxième surface latérale partielle sont espacés sur sensiblement l'ensemble de leur longueur et définissent un surface chanfreinée (54, 138) entre eux ;
dans lequel la surface chanfreinée (54, 138) est renfoncée par rapport à une première surface externe de la première surface latérale partielle (52, 132) et à une deuxième surface externe de la deuxième surface latérale partielle (52, 132), et facultativement dans lequel la première surface chanfreinée (54, 138) a une forme généralement concave.

6. Dispositif de fixation (20, 100) selon la revendication 5, dans lequel le bord de la première surface latérale partielle débute au niveau du premier coin supérieur (50) et le bord de deuxième surface latérale partielle débute au niveau du deuxième coin supérieur (50).

7. Dispositif de fixation (20, 100) selon la revendication 5, comprenant en outre :
un premier bord supérieur qui s'étend à l'écart du premier coin supérieur (50) et se termine au niveau d'un premier point distal, et dans lequel le bord de première surface latérale partielle débute au niveau du premier point distal ;
un deuxième bord supérieur qui s'étend à l'écart du deuxième coin supérieur (50) et se termine au niveau d'un deuxième point distal, et dans lequel le bord de deuxième surface latérale partielle débute au niveau du deuxième point distal.

8. Dispositif de fixation (20, 100) selon la revendication 1, dans lequel la partie de tige (22, 102) inclut un ou plusieurs filetages (32, 122) formés autour d'une surface externe de celle-ci.

9. Dispositif de fixation (20, 100) selon la revendication 1, comprenant en outre une partie de bride (24) disposée entre la partie de tête (26, 106) et la partie de tige (22, 102).

10. Dispositif de fixation (20, 100) selon la revendication 9, dans lequel la partie de bride (24) a une forme généralement ovale.

11. Dispositif de fixation (20, 100) configuré pour être utilisé dans une automobile pour fixer deux structures l'une à l'autre, comprenant :
une partie de tige (22, 102) comportant une première extrémité (28,108) et une deuxième extrémité (30, 110) disposée à l'écart de la première extrémité (28, 108) ;
une partie de tête (26, 106) disposée près de la deuxième extrémité (30, 110) de la partie de tige (22, 102) ;
la partie de tête (26, 106) comportant une partie de corps (42, 122) configurée pour entrer en prise avec une douille hexagonale standard, dans lequel la partie de corps (42, 122) a une forme différente d'une forme hexagonale standard et incluant quatre points de contact séparés en vue de l'entrée en prise avec la douille de forme hexagonale standard, et dans lequel la partie de tête (26, 106) inclut un périmètre inférieur entre la partie de corps (42, 122) et la partie de tige (22, 102), le périmètre inférieur ayant une forme hexagonale standard incluant six coins inférieurs (44, 124) et six parties de bord inférieures d'une longueur sensiblement égale configurées pour recevoir la douille hexagonale standard pour faciliter le serrage et de desserrage du dispositif de fixation (20, 100).

12. Dispositif de fixation (20, 100) selon la revendication 11, dans lequel la partie de tête (26, 106) inclut en outre un périmètre supérieur ayant une forme différente de celle du périmètre inférieur.

13. Dispositif de fixation (20, 100) selon la revendication 12, dans lequel le périmètre inférieur a une longueur supérieure à celle du périmètre supérieur.

14. Dispositif de fixation (20, 100) selon la revendication 12, dans lequel la partie de corps (42, 122) inclut une pluralité de surfaces d'engagement de contact incluant une paire de parois latérales opposées (48, 128) et une paire de surfaces latérales partielles (52, 132) disposées sur des côtés opposés de la partie de corps (42, 122), et facultativement dans lequel un premier côté opposé de la partie de corps (42, 122) inclut une première surface latérale partielle (52, 132) qui s'étend à l'écart de l'une de la paire de parois latérales opposées (48, 128), et une deuxième surface latérale partielle (52, 132) qui s'étend à l'écart de l'autre de la paire de parois latérale opposées (48, 128) ;
dans lequel la première surface latérale partielle (52, 132) et la deuxième surface latérale partielle (52, 132) sur le premier côté de la partie de corps (42, 122) convergent l'une vers l'autre et se coupent au niveau d'un premier bord inférieur (44, 124), et facultativement où un deuxième côté opposé de la partie de corps (42, 122) inclut une deuxième surface latérale partielle (52, 132) qui s'étend à l'écart de l'une de la paire de parois latérales opposées (48, 128), et une deuxième surface latérale partielle (52, 132) qui s'étend à l'écart de l'autre de la paire de parois latérales opposées (48, 128) ;
dans lequel la première surface latérale partielle (52, 132) et la deuxième surface latérale partielle (52, 132) sur le deuxième côté de la partie de corps (42, 122) convergent l'une vers l'autre et se coupent au niveau d'un deuxième bord inférieur (44, 124).

15. Dispositif de fixation (20, 100) selon la revendication 14, dans lequel la première surface latérale partielle (52, 132) et la deuxième surface latérale partielle (52, 132) définissent une première surface chanfreinée (54, 138) entre elles, qui est renfoncée par rapport à la première surface latérale partielle (52, 132) et à la deuxième surface latérale partielle (52, 132).
